**Europäisches Patentamt**

**European Patent Office**

**Office européen des brevets**

(19)

(11) Veröffentlichungsnummer: **0 054 128**

**A2**

# (12) EUROPÄISCHE PATENTANMELDUNG

(21) Anmeldenummer: **81108497.9**

(22) Anmeldetag: **19.10.81**

(51) Int. Cl.³: **G 02 B 17/02**
**G 02 B 23/08**

(30) Priorität: **11.12.80 DE 3046626**

(43) Veröffentlichungstag der Anmeldung:
**23.06.82 Patentblatt 82/25**

(84) Benannte Vertragsstaaten:
**CH DE FR GB LI**

(71) Anmelder: **Firma Carl Zeiss**
**Postfach 1369/1380**
**D-7082 Oberkochen(DE)**

(72) Erfinder: **Lang, Walter, Dr.**
**Finkenweg 33**
**D-7923 Königsbronn(DE)**

(72) Erfinder: **Blaha, Erich**
**Staufenstrasse 15**
**D-7081 Essingen(DE)**

(72) Erfinder: **Schmauder, Roland, Ing. grad.**
**Am Haselstrauch 1**
**D-7081 Oberkochen(DE)**

(72) Erfinder: **Muchel, Franz, Dipl.-Phys.**
**Lortzingstrasse 2**
**D-7923 Königsbronn(DE)**

(54) **Verfahren und Vorrichtung zur automatischen Kompensation der Bilddrehung durch eine Gelenkoptik, sowie Anwendung dieser Vorrichtung.**

(57) Bei Gelenkoptiken tritt durch die Gelenke eine Drehung des Bildes ein. Die Erfindung beseitigt diesen Nachteil, indem ein Signal erzeugt wird, dessen Polarität von der Drehrichtung abhängt, in welcher das in der Beobachtungsebene (64) erzeugte Bild gegenüber dem Objekt gedreht ist. Durch das Signal wird ein in der Gelenkoptik angeordnetes Kompensationselement (72) so lange gedreht, bis das Signal verschwindet. Zur Erzeugung des Signales werden zwei Vorrichtungen angegeben: 1. Am Anfang der Gelenkoptik wird eine Marke (16) eingespiegelt, die am Ende der Gelenkoptik auf eine Sensor (67) abgebildet wird. 2. An allen Gelenken sitzen Winkelstellungsgeber (111, 112 ...), die mit einem Minicomputer (130) verbunden sind, welcher die resultierende Bilddrehung errechnet und über einen Digital-Analog-Wandler (131) ein entsprechendes Signal ausgibt.

Fig. 2

EP 0 054 128 A2

Verfahren und Vorrichtung zur automatischen Kompensation der Bilddrehung durch eine Gelenkoptik, sowie Anwendung dieser Vorrichtung

Die Erfindung betrifft ein Verfahren zur Kompensation der Bilddrehung durch eine Gelenkoptik, die aus Gliedern mit Linsen zur optischen Abbildung, sowie Gelenken mit Spiegeln oder Prismen zur Umlenkung des Strahlenganges besteht.

Gelenkoptiken werden z.B. bei Operationsmikroskopen und Endoskopen benutzt, um Einrichtungen für die Mitbeobachtung und Dokumentation (Photo, Film, Fernsehen) anzuschließen. Dabei besteht der Wunsch, das Operationsmikroskop oder Endoskop von allem Zubehör zu entlasten, damit es möglichst leicht in alle Richtungen bewegt werden kann. Die Mitbeobachtungs- und Dokumentationseinrichtungen werden daher auf einem gesonderten Tragarm fest installiert und flexibel mit dem Operationsmikroskop oder Endoskop verbunden. Hierfür werden Gelenkoptiken verwendet, die aus Gliedern mit Linsen zur optischen Abbildung bestehen, welche durch Gelenke verbunden sind, in denen Spiegel oder Prismen den Strahlengang umlenken. Der Nachteil bekannter Gelenkoptiken besteht darin, daß mit der Verstellung des Operationsmikroskopes oder Endoskopes und der dadurch bedingten Veränderung der Gelenke eine Bilddrehung auftritt. Diese Bilddrehung läßt sich mit geeigneten optischen Elementen rückgängig machen. Bekannte Vorrichtungen, bei denen dies von Hand durchgeführt werden muß, sind für die Praxis zu aufwendig in der Bedienung.

In der DE-OS 27 54 614 ist eine Gelenkoptik beschrieben, bei der die Bilddrehung automatisch dadurch kompensiert wird, daß die Gelenke durch mechanische Getriebe miteinander verbunden sind und in jedem Glied ein zusätzliches Umkehrprisma angeordnet ist, das durch Zahnräder um seine Längsachse drehbar ist.

Eine derartige Gelenkoptik ist in mechanischer und optischer Beziehung sehr aufwendig, insbesonders dann, wenn ein Manipulationsspielraum in allen Richtungen für das Operationsmikroskop oder Endoskop gefordert wird und dadurch zahlreiche Gelenke notwendig sind.

Die vorliegende Erfindung hat die Aufgabe, ein Verfahren und eine Vorrichtung zu schaffen, die insbesondere bei Gelenkoptiken mit großem Manipulationsspielraum in allen Richtungen, d.h. mit vielen Gelenken, mit geringem Aufwand automatisch die Bilddrehung exakt kompensiert.

Das erfindungsgemäße Verfahren besteht darin, daß ein Signal erzeugt wird, dessen Polarität abhängig ist von der Drehrichtung des in der Beobachtungsebene erzeugten Bildes gegenüber dem Objekt, und daß gesteuert von diesem Signal ein im Strahlengang der Gelenkoptik angeordnetes Kompensationselement bis zum Verschwinden des Signals betätigt wird.

Eine Vorrichtung zur Durchführung dieses Verfahrens zeichnet sich dadurch aus, daß in einer Zwischenbildebene, in der das dort erzeugte Zwischenbild eine definierte Lage zum Objekt hat, eine Markierung eingespiegelt ist, daß in derjenigen Zwischenbildebene, in der das dort erzeugte Zwischenbild eine definierte Lage zur Beobachtungsvorrichtung haben soll, ein Sensor für das Bild der Markierung fest angeordnet ist, und daß der Sensor über eine Schaltung mit einem Stellmotor zur Drehung des optischen Kompensationselementes verbunden ist.

Die Einspiegelung einer Markierung kann z.B. durch einen Lichtleiter erfolgen, der unter einem Winkel von 45° abgeschrägt ist. Als Lichtquellen für die Markierung können z.B. Infrarotstrahler oder Leuchtdioden verwendet werden. Die Wellenlängen der optischen Strahlung, welche von der Markie-

rung ausgeht, und die Wellenlängen, für welche der Sensor empfindlich ist, können durch Filter optimal aufeinander abgestimmt werden. Sie können auch so gewählt werden, daß die Marke für das menschliche Auge unsichtbar ist. Die Markierung kann auch dadurch erzeugt werden, daß in der ersten Zwischenbildebene eine kleine Halbkugel aus optischem Material angeordnet ist, die alle auf sie auftreffenden Lichtstrahlen des Zwischenbildes in ihren Mittelpunkt ablenkt. Dieser helle Punkt wird dann auf den Sensor abgebildet. Eine andere Möglichkeit besteht darin, daß in der ersten Zwischenbildebene eine Marke angeordnet ist, welche für diejenige Strahlung, für welche der Sensor empfindlich ist, undurchlässig ist. Dann reagiert der Sensor auf eine dunkle Marke. In einer bevorzugten Ausführungsform wird für die Kompensation der Bilddrehung ein Doveprisma verwendet.

Die mit der Erfindung erzielten Vorteile bestehen insbesondere darin, daß der Aufwand für die automatische Kompensation der Bilddrehung unabhängig von der Zahl der Gelenke ist und damit auch bei Gelenkoptiken mit vielen Gelenken gering ist. Außerdem gehen in die Genauigkeit der Kompensation keine mechanischen oder optischen Toleranzen ein, sondern lediglich die Ansprechempfindlichkeit des Sensors.

Das Verfahren nach der Erfindung läßt sich auch mittels einer Vorrichtung durchführen, bei der alle Gelenke mit Winkelstellungsgebern verbunden sind, die über Schaltungen zur Signalaufbereitung mit einem Minicomputer in Verbindung stehen, der aus den Signalen der Winkelstellungsgeber ein, der gesamten Bilddrehung proportionales, Signal erzeugt und dessen Ausgang mit einem Stellmotor zur Drehung des optischen Kompensationselementes verbunden ist.

In einer bevorzugten Ausführungsform dieser Lösung ist das optische Element zur Kompensation der Bilddrehung ebenfalls mit einem Winkelstellungsgeber verbunden, dessen Stellung nach einer Signalaufbereitung ebenfalls dem Minicomputer zugeführt wird, der den Istwert mit dem errechneten Sollwert vergleicht und ein Korrektursignal über eine Schaltung an den Stellmotor gibt.

Der Vorteil dieser Lösung besteht darin, daß auch nach dem Einschalten und bei schnellen, weiten Drehungen der Gelenke das optische Element zur Kompensation immer auf dem kürzesten Weg nachgestellt wird. Da für jedes Gelenk nur ein (relativ einfacher) Winkelstellungsgeber einschließlich Signalaufbereitung erforderlich ist, bleibt bei Gelenkoptiken mit zahlreichen Gelenken der Aufwand in Grenzen.

Weitere vorteilhafte Ausgestaltungen der Erfindung ergeben sich aus den Unteransprüchen.

Die Erfindung wird im folgenden anhand der Figuren 1 bis 7 der beigefügten Zeichnungen näher erläutert. Im einzelnen zeigen

Fig. 1    ein Ausführungsbeispiel einer Gelenkoptik mit eingespiegelter Markierung;

Fig. 2    eine schematische Darstellung der automatischen Kompensation der Bilddrehung;

Fig. 3    eine Schaltskizze für die Signalverarbeitung zur automatischen Kompensation der Bilddrehung;

Fig. 4    ein Ausführungsbeispiel einer Gelenkoptik mit Rückmeldung der Gelenkstellungen;

Fig. 5    eine Anwendung der Gelenkoptik mit Herausführung des Strahlenganges hinter dem Objektiv durch einen Teilerwürfel;

- 5 -

Fig. 6   eine Anwendung der Gelenkoptik mit Herausführung des
Strahlenganges vor dem Objektiv zwischen den Eintrittspupillen eines Stereo-Operationsmikroskopes
oder -Endoskopes;

Fig. 7   eine Anwendung der Gelenkoptik mit Herausführung des
Strahlenganges vor dem Objektiv neben der Eintrittspupille.

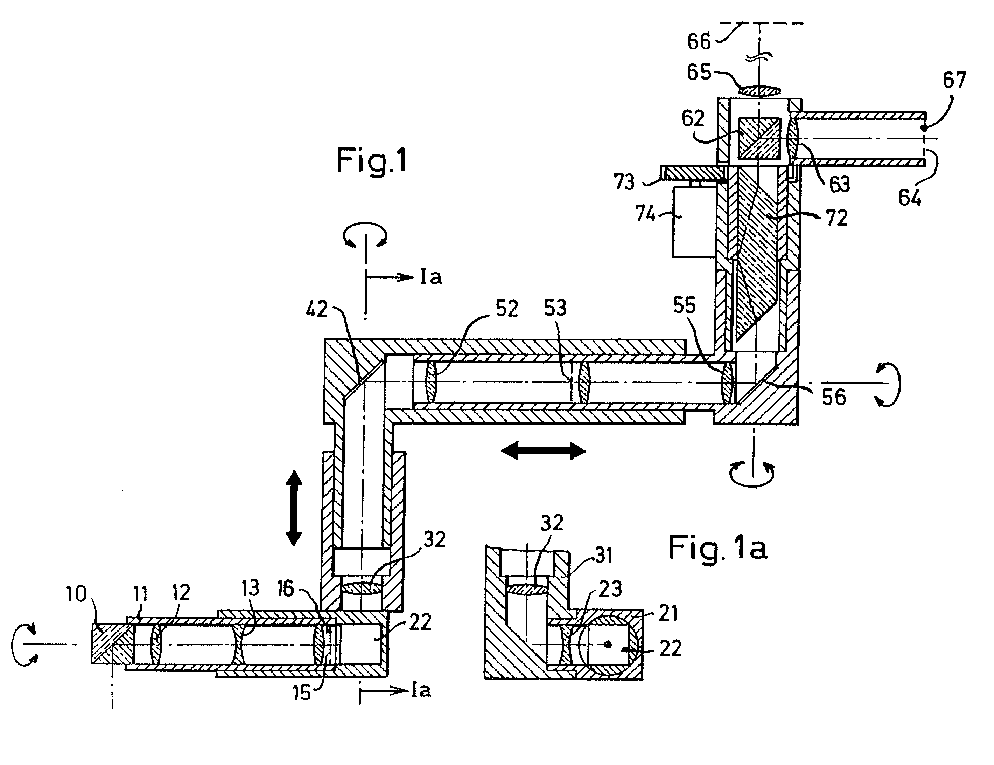

Fig. 1 zeigt eine Gelenkoptik, die als Drehschiebegelenkoptik ausgebildet und Gegenstand einer gesonderten Anmeldung
(Aktenzeichen          ) ist. Für die vorliegende Erfindung
ist von Bedeutung, daß in dem vom Teilerwürfel 10 aus dem
Operationsmikroskop oder Endoskop abgezweigten Strahlengang
durch die Linsen 12 und 13 in der Ebene 15 ein reelles
Zwischenbild erzeugt wird. Dieses Zwischenbild hat noch eine
definierte Lage zum Operationsmikroskop oder Endoskop, da
das Rohr 11 fest mit dem Gerät verbunden ist. Das Zwischenbild 15 enthält bei der vorliegenden Erfindung eine Markierung 16, die zusammen mit ihm durch die Linsen 23, 32 und
52 über die Spiegel 22 und 42 in die nächste Zwischenbildebene 53 abgebildet wird. Letztere wird über die Linse 55,
den Spiegel 56, über ein optisches Element zur Bilddrehung
72 und über den Teilerwürfel 62 sowohl durch die Linse 65
auf die Filmebene 66 einer Dokumentationseinrichtung als
auch über die Linse 63 in eine Beobachtungsebene 64 abgebildet. Die Bildebenen 66 und 64 haben definierte Lagen zur
Dokumentations- und Mitbeobachtungseinrichtung. In diesen
Ebenen soll das Bild unabhängig von der Stellung der Gelenke
auch in Bezug auf seine Orientierung exakt dem Ausgangsbild
entsprechen. Um dies zu erreichen ist in der Ebene 64 ein
Sensor 67 angeordnet und vor dem Teilerwürfel 62 befindet
sich ein optisches Element zur Bilddrehung 72, das über ein
Getriebe 73 vom Motor 74 um seine optische Achse gedreht
werden kann.

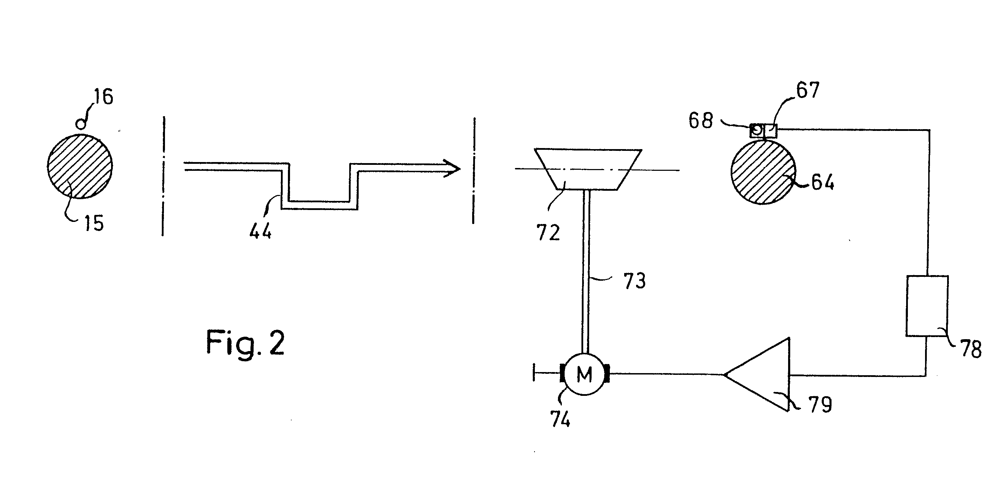

Der funktionelle Aufbau der automatischen Kompensation der Bilddrehung ist in Fig. 2 dargestellt. In der Zwischenbildebene 15 befindet sich innerhalb oder außerhelb des Zwischenbildes die Markierung 16. Hinter der Gelenkoptik 44 und dem optischen Element 72 zur Kompensation der Bilddrehung liegt die Beobachtungsebene 64 mit dem Sensor 67, auf den ein Bild 68 der Markierung 16 abgebildet wird. Weicht diese Markierung von der Null-Lage ab, dann erzeugt der Sensor 67 ein Signal. In der Signalaufbereitung 78 wird daraus ein Signal zum Ansteuern des Servoverstärkers 79 erzeugt. Der Servoverstärker 79 steuert den Motor 74 an, welcher über das Getriebe 73 das optische Element 72 zur Kompensation der Bilddrehung solange dreht, bis die Bildmarkierung 68 sich wieder in der Null-Lage befindet.

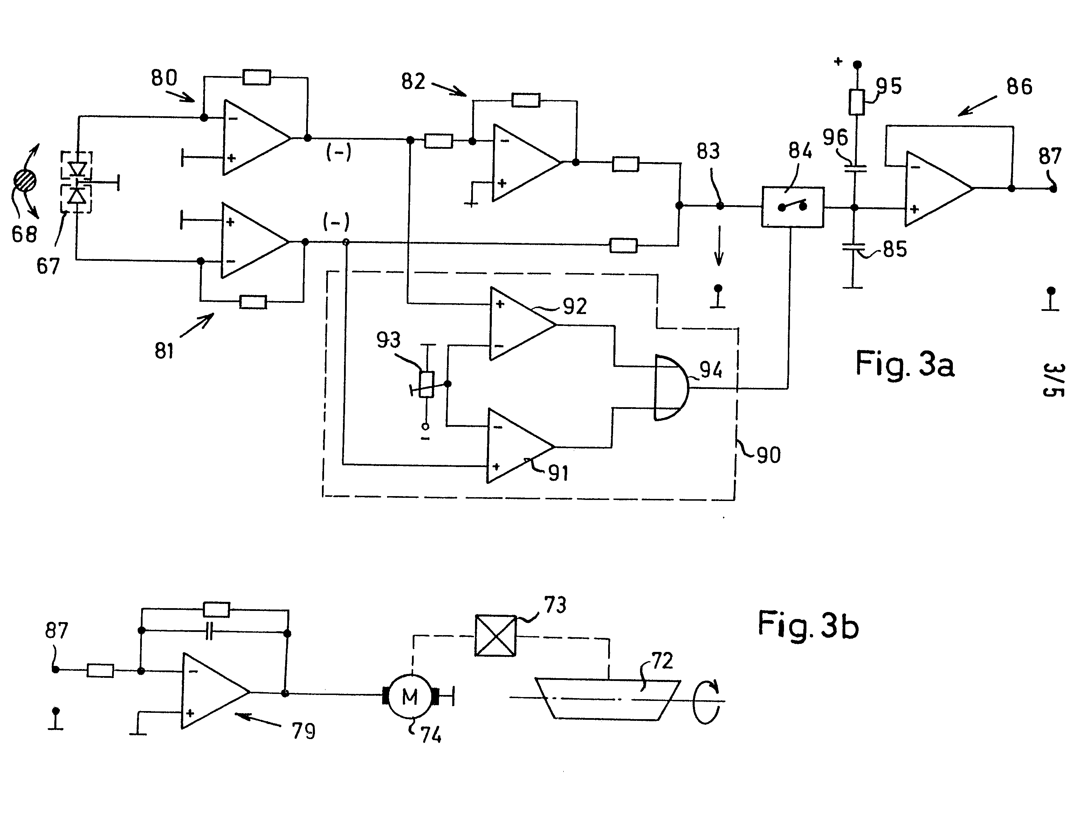

Fig. 3 zeigt die zugehörige Schaltung. Mit 67 ist wieder der Sensor bezeichnet, der vorzugsweise als Differentialphotodiode ausgebildet ist. Von ihr werden die Verstärker 80 und 81 angesteuert. Das Signal des Verstärkers 80 wird im Verstärker 82 in der Phase um 180° gedreht, so daß am Schaltungspunkt 83 ein richtungsabhängiges Differenz-Photosignal mit positivem oder negativem Potential gegen Erde entsteht. Wenn die Bildmarke 68 in der Mitte der Differential-Photodiode 67 steht, dann ist das Differenz-Photosignal praktisch Null. Bei einer langsamen Auswanderung der Bildmarke 68 entsteht dagegen eine richtungsabhängige Spannung, die über den geschlossenen FET-Schalter 84 und einen hochohmigen Spannungsfolger 86 zum Servoverstärker 79 gelangt, der den Motor 74 richtungsabhängig ansteuert und damit über das Getriebe 73 das Dove-Prisma 72 richtungsabhängig dreht.

Bei einer schnellen oder ruckartigen Bewegung der Gelenkoptik verläßt die Bildmarke 68 zunächst ein Feld der Differential-Photodiode und trifft das andere Feld voll. Dies ergibt ein Maximum des Differenz-Photosignales. In diesem Fall spricht der Komperator 90 an. Dieser Komperator besteht aus den Verstärkern 91 und 92, einem einstellbarem Widerstand 93 für den Schwellwert und dem ODER-Gatter 94. Wenn das verstärkte Photosignal eine der beiden Photodiodenhälften den Schwellwert unterschreitet, öffnet der Komperator 90 den FET-Schalter 84. Solange der FET-Schalter geöffnet ist, wird das letzte Differenz-Photosignal im Kondensator 85 gespeichert und der Servoverstärker 79 erhält so lange ein Steuersignal für die entgegengesetzte Richtung, in welcher die Bildmarke die Differential-Photodiode verlassen hat, bis der Schwellwert wieder überschritten wird, d.h. bis die Bildmarke wieder beide Hälften der Differential-Photodiode bedeckt und damit die unmittelbare Nachführung des Dove-Prismas 72 erfolgt.

Beim Einschalten der Anlage ist es unwahrscheinlich, daß die Bildmarke auf der Differential-Photodiode liegt. Deswegen wird beim Einschalten grundsätzlich der Speicherkondensator 85 über ein Differenzierglied bestehend aus dem Widerstand 95 und dem Kondensator 96 mit einem Impuls vorgegebener Länge aufgeladen. Der FET-Schalter 84 ist so lange geöffnet, bis die Bildmarke 68 beide Hälften der Differential-Photodiode 67 bedeckt.

Die Einspiegelung der Markierung erfolgt in einer vorteilhaften Ausgestaltung der Erfindung durch einen Lichtleiter, der senkrecht zur optischen Achse angeordnet wird und der unter einem Winkel von 45$^{\circ}$ zur optischen Achse abgeschrägt ist. In diesem Fall wirkt der Lichtleiter zugleich als Zylinderlinse, so daß seine abgeschrägte, beleuchtete Endfläche als dünner Strich abgebildet wird.

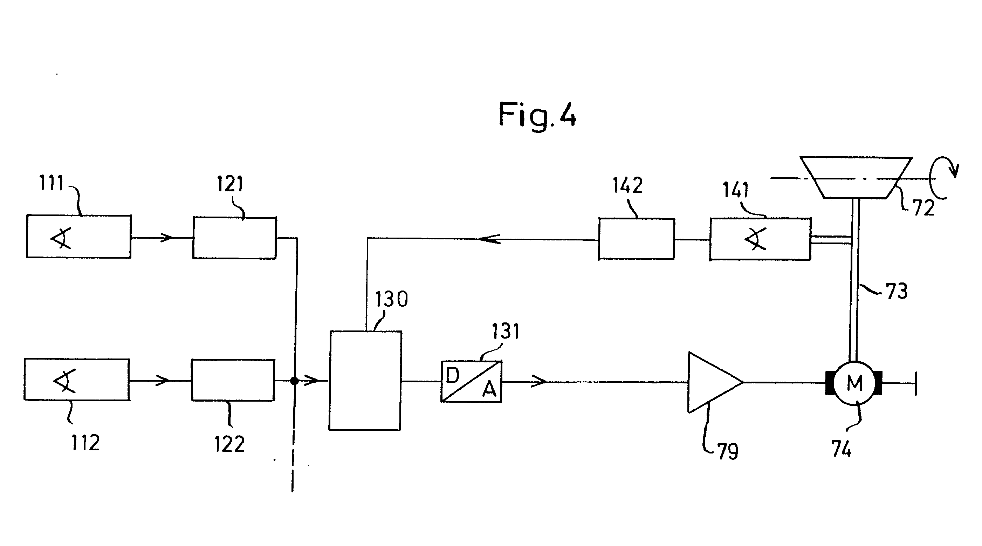

Fig. 4 zeigt das Prinzipschaltbild für eine andere Lösung zur automatischen Korrektur der durch die Gelenke bewirkten Bilddrehung. An allen Gelenken befinden sich Winkelstellungsgeber 111, 112 usw., deren Stellung Einheiten zur

- 8 -

Signalaufbereitung 121, 122 usw. zugeführt wird. Die dort aufbereiteten Signale werden an einen Minicomputer 130 weitergeleitet, der aus den einzelnen Signalen die resultierende Bilddrehung ermittelt. Die zeitlich in dichter Reihenfolge vorliegenden Ausgangswerte des Minicomputers werden einem Digital-Analog-Wandler 131 zugeführt, der eine Spannung erzeugt, die der zur Kompensation der Bilddrehung notwendigen Stellung des optischen Elementes 72 entspricht. In einer vorteilhaften Ausführungsform ist auch dieses Element mit einem Winkelstellungsgeber 141 verbunden, dessen Stellung nach einer Signalaufbereitung 142 ebenfalls dem Minicomputer zugeführt wird. Letzterer vergleicht laufend den Istwert mit dem errechneten Sollwert und gibt entsprechende Korrektursignale über den Servoverstärker 79 an den Stellmotor 74, der über das Getriebe 73 mit dem optischen Element zur Kompensation der Bilddrehung 72 verbunden ist. Nach einer einmaligen Null-Positionierung des Rückstellprismas wird somit jede Bilddrehung infolge der Drehung der Gelenke automatisch korrigiert.

In einer anderen Ausführungsform wird in der Signalaufbereitung 142 ein Analogsignal erzeugt, welches als Istsignal einem Vergleicher zugeführt wird. Der Vergleicher vergleicht dieses Signal mit dem analogen Sollsignal und gibt ein entsprechendes Korrektursignal über den Servoverstärker 79 an den Stellmotor 74.

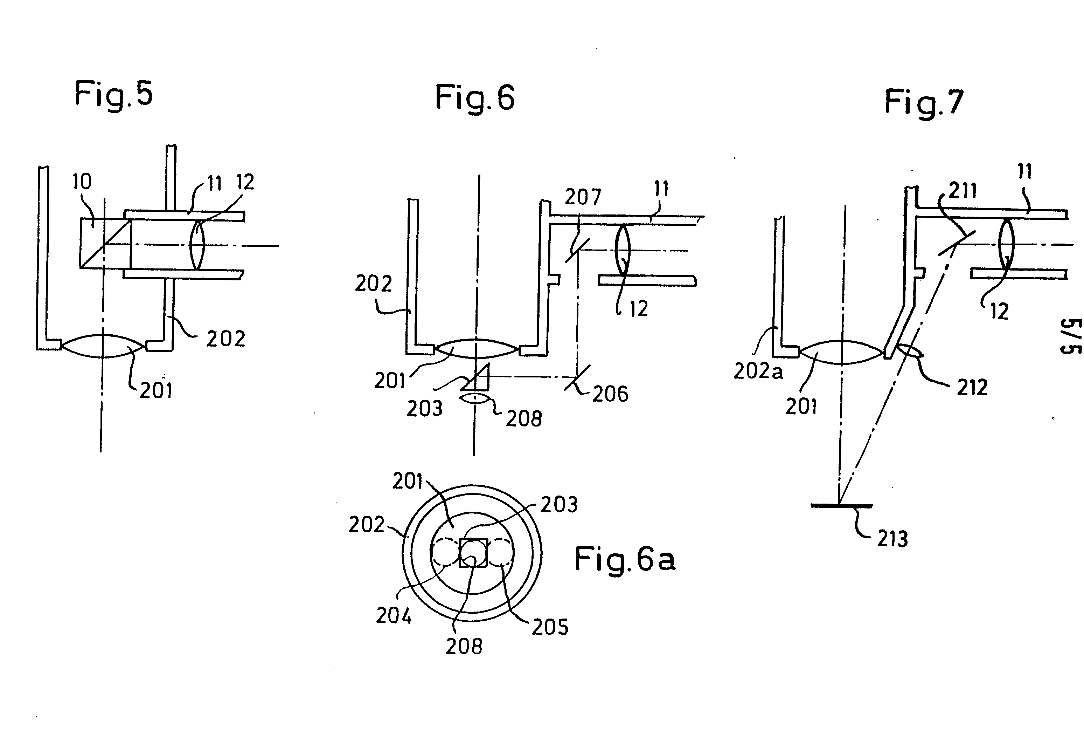

Ein Beispiel für die Ankopplung der beschriebenen Gelenkoptik an ein Operationsmikroskop zeigt Fig. 5. Mit 201 ist dessen Objektiv bezeichnet, das im Gehäuse 202 sitzt. Hinter dem Objektiv ist der aus Fig. 1 bekannte Teilerwürfel 10 angeordnet, durch den ein Teil des Strahlenganges in die Gelenkoptik abgezweigt wird, die im Anfang aus dem Rohr 11 und der Linse 12 besteht. Diese Art der Ankopplung ist auch für Stereo-Operationsmikroskope und -Endoskope geeignet. Der Teilerwürfel 10 sitzt dabei in einem Strahlengang, und im zweiten Strahlengang ist ein entsprechender Teilerwürfel angeordnet, an den weitere Einrichtungen angeschlossen werden können.

Ein Nachteil dieser Ankopplung ist der verhältnismäßig grosse Lichtverlust durch den Teilerwürfel. Dadurch wird entweder das Beobachtungsbild dunkler oder die Beleuchtungsstärke des Gegenstandes muß entsprechend vergrößert werden.

Dieser Nachteil wird bei Stereo-Operationsmikroskopen oder -Endoskopen durch die in Fig. 6 gezeigte Anordnung vermieden. Hier wird der Strahlengang für die Gelenkoptik vor dem Objektiv 201 durch einen Spiegel oder ein Prisma 203 abgezweigt, das zwischen den beiden Eintrittspupillen 204 und 205 der Stereobeobachtungsstrahlengänge des Mikroskops angeordnet ist, wie Fig. 6a in einer Draufsicht zeigt. Um den Anfang der Gelenkoptik nicht zu dicht an das Objekt zu bringen, erfolgt eine Umlenkung über zwei Spiegel 206 und 207. Vor dem Prisma ist ein Objektiv 208 angeordnet, das für den abgezweigten Strahlengang die Rolle des Objektives 201 übernimmt. Dieses Objektiv kann auch später im Strahlengang angeordnet sein, z.B. zwischen den Spiegeln 206 und 207.

Bei Operationsmikroskopen bildet das in den Fig. 5 und 6 mit 201 bezeichnete Objektiv unmittelbar das Objekt ab. Bei Endoskopen hingegen erfolgt die Abzweigung des Strahlenganges für die Gelenkoptik meist am Ende des Gerätes. Das Objektiv 201 bildet dann nicht das Objekt selbst, sondern ein Zwischenbild des Objektes ab.

Eine weitere Möglichkeit der Ankopplung der Gelenkoptik zeigt Fig. 7. Hier wird der Strahlengang für die Gelenkoptik vor dem Objektiv 201 und zwar möglichst dicht neben der Eintrittspupille des Objektivs 201 unter einem anderen Winkel direkt vom Objekt 213 entnommen und über den Spiegel 211 in die Gelenkoptik eingeführt. Das Objektiv 212 übernimmt für die Gelenkoptik die Rolle des Objektives 201.

- 11 -

Patentansprüche

1. Verfahren zur Kompensation der Bilddrehung durch eine Gelenkoptik; die aus Gliedern mit Linsen zur optischen Abbildung, sowie Gelenken mit Spiegeln oder Prismen zur Umlenkung des Strahlenganges besteht, dadurch gekennzeichnet, daß ein Signal erzeugt wird, dessen Polarität abhängig ist von der Drehrichtung des in der Beobachtungsebene erzeugten Bildes gegenüber dem Objekt, und daß gesteuert von diesem Signal ein im Strahlengang der Gelenkoptik angeordnetes Kompensationselement bis zum Verschwinden des Signals betätigt wird.

2. Vorrichtung zur Durchführung des Verfahrens nach Anspruch 1, dadurch gekennzeichnet, daß in einer Zwischenbildebene (15), in der das dort erzeugte Zwischenbild eine definierte Lage zum Objekt hat, eine Markierung (16) eingespiegelt ist, daß in derjenigen Zwischenbildebene (64), in der das dort erzeugte Zwischenbild eine definierte Lage zur Beobachtungsvorrichtung haben soll, ein Sensor (67) für das Bild (68) der Markierung (16) fest angeordnet ist, und daß der Sensor (67) über eine Schaltung (78,79) mit einem Stellmotor (74) zur Drehung des optischen Kompensationselementes (72) verbunden ist.

3. Vorrichtung zur Durchführung des Verfahrens nach Anspruch 1, dadurch gekennzeichnet, daß alle Gelenke mit Winkelstellungsgebern (111,112) verbunden sind, die über Schaltungen (121,122) zur Signalaufbereitung mit einem Minicomputer (130) in Verbindung stehen, der aus den Signalen der Winkelstellungsgeber ein, der gesamten Bilddrehung proportionales, Signal erzeugt und dessen Ausgang mit einem Stellmotor (74) zur Drehung des optischen Kompensationselementes (72) verbunden ist.

4. Gelenkoptik nach Anspruch 3, dadurch gekennzeichnet, daß das optische Element (72) zur Kompensation der Bilddrehung mit einem Winkelstellungsgeber (141) verbunden ist, der über eine Schaltung (142) zur Signalaufbereitung mit dem Minicomputer (130) in Verbindung steht, der den Istwert mit dem errechneten Sollwert vergleicht und ein Korrektursignal über eine Schaltung (79) an den Stellmotor (74) gibt.

5. Gelenkoptik nach Anspruch 2, dadurch gekennzeichnet, daß in der ersten Zwischenbildebene (15) als Markierung (16) ein Lichtleiter angeordnet ist, der an seinem Ende unter einem Winkel von 45° abgeschrägt ist.

6. Gelenkoptik nach Anspruch 2 oder 5, dadurch gekennzeichnet, daß die Lichtquelle für die Markierung ein Infrarotstrahler ist.

7. Gelenkoptik nach Anspruch 2 oder 5, dadurch gekennzeichnet, daß die Lichtquelle für die Markierung eine Leuchtdiode ist.

8. Gelenkoptik nach Anspruch 2, dadurch gekennzeichnet, daß in der ersten Zwischenbildebene (15) eine kleine Halbkugel aus optischem Material angeordnet ist, die alle auf sie auftreffenden Lichtstrahlen in ihren Mittelpunkt ablenkt.

9. Gelenkoptik nach Anspruch 2, dadurch gekennzeichnet, daß in der ersten Zwischenbildebene (15) eine für optische Strahlung undurchlässige Marke bzw. ein undurchlässiger Zeiger angeordnet ist.

10. Gelenkoptik nach Anspruch 2 oder 3 und einem oder mehreren der Ansprüche 4 bis 9, dadurch gekennzeichnet, daß das optische Element (72) zur Kompensation der durch die Ge-

- 13 -

lenke bedingten Bilddrehung ein Doveprisma ist.

11. Anwendung der Gelenkoptik nach einem oder mehreren der Ansprüche 1 bis 10 für Operationsmikroskope oder Endoskope zum Anschluß von Mitbeobachtungs- und Dokumentationseinrichtungen, dadurch gekennzeichnet, daß der Strahlengang für die Gelenkoptik hinter dem Objektiv (201) durch ein Teilerprisma (10) herausgeführt ist.

12. Anwendung der Gelenkoptik nach einem oder mehreren der Ansprüche 1 bis 10 für Stereo-Operationsmikroskope oder -Endoskope zum Anschluß von Mitbeobachtungs- und Dokumentationseinrichtungen, dadurch gekennzeichnet, daß der Strahlengang für die Gelenkoptik vor dem Objektiv (201) zwischen den Eintrittspupillen (204 und 205) durch einen Spiegel oder ein Prisma (203) herausgeführt ist.

13. Anwendung der Gelenkoptik nach einem oder mehreren der Ansprüche 1 bis 10 für Operationsmikroskope oder Endoskope zum Anschluß von Mitbeobachtungs- und Dokumentationseinrichtungen, dadurch gekennzeichnet, daß der Strahlengang für die Gelenkoptik vor dem Objektiv (201) neben der Eintrittspupille herausgeführt ist.

Fig.1

Fig.1a

Fig.2

Fig. 3a

Fig. 3b

## Fig.4

Fig.7

Fig.6

Fig.6a

Fig.5